# EUROPÄISCHE PATENTANMELDUNG

(11) **EP 1 505 557 A1**
(43) Veröffentlichungstag der Anmeldung: **09.02.2005**
(21) Anmeldenummer: 04016196.0
(22) Anmeldetag: 09.07.2004
(51) Int. Cl.: G08G 5/06, G08B 25/10

(54) **Überwachungssystem für terrestrische Navigations- und Landesysteme**

(30) Priorität: 06.08.2003 DE 10335870
(71) Anmelder: THALES ATM GmbH, 63225 Langen (DE)
(72) Erfinder: Franke, Erich, 75203 Königsbach-Stein (DE); Koller, Steffen, Dipl.-Ing., 70499 Stuttgart (DE); Montaron, Martine, 71254 Ditzingen (DE)
(74) Vertreter: Dreiss, Fuhlendorf, Steimle & Becker

(57) **Zusammenfassung**

Die Erfindung betrifft ein Überwachungssystem für terrestrische Navigations- und Landesysteme. Mit einem solchen Überwachungssystem werden die von dem Navigationsund Landesystem ausgeübten Funktionen, insbesondere die an die Luftfahrzeuge ausgesandten Informationen überwacht. Gemäß der Erfindung werden nun auch durch äußere, anlagenunabhängige Störeinflüsse erfasst und bei der Überwachung mitberücksichtigt.

## Beschreibung

Die Erfindung betrifft ein Überwachungssystem für terrestrische Navigations- und Landesysteme. In solchen Navigations- und Landesystemen, die beispielsweise unter der Abkürzung ILS, d.h. "Instrumenten Landesystem" oder auch unter der Abkürzung MLS, d.h. "Mikrowellen-Landesystem" als bekannt vorausgesetzt werden können, sind Überwachungssysteme eingebaut, welche die vom Navigations- oder Landesystem selbst ausgeübten Funktonen, also insbesondere die Aussendung und den Empfang von Informationen über die Antennen des Systems dauernd überwachen und auswerfen. Im Falle eines Landesystems der vorstehend genannten Art werden Funksignale ausgesendet, die den im Landebereich befindlichen Luftfahrzeugen jeweils notwendige Informationen über den Ort und den Kurs übermitteln, insbesondere sind dies der Landekurs und der Gleitwinkel für die vorgesehene Landung.

Angesichts der im Luftverkehr maßgeblichen Bedingungen, die einerseits orts-; zeit-; wetter- und verkehrsabhängig sind und die andererseits durch die bestehenden Sicherheitsbestimmungen beeinflusst werden, werden an die Navigations- und Landesysteme und ihre Funktionssicherheit erhebliche Forderungen gestellt. Dies gilt vor allem dann, wenn eine Landung auch ohne direkte Bodensicht, d.h. unter Kontrolle des sogenannten Autopiloten automatisch erfolgen soll.

Derzeit im Betrieb befindliche, bekannte Navigations- und Landesysteme bzw. die zum Betrieb vorgesehenen Anlagen sind für den Dauereinsatz mit hoher Verfügbarkeit konzipiert.

Dazu sind diese Anlagen mit doppelt vorhandenen und betriebenen Sendern sowie einer Sendeantenne zur Abstrahlung der entsprechenden Signale ausgestattet.

Eine weitere Sicherheitsmaßnahme zur Vermeidung der Aussendung falscher Kurs- und Lande-Informationen besteht darin, die ausgesendeten Signale permanent durch eine systemeigene Überwachungseinrichtung, dem sogenannten Monitor, zu überwachen. Dies geschieht als Dauerüberwachung. Sobald die Überwachungseinrichtung eine Abweichung des Signals von den Parametern der Sollwerte feststellt, wird automatisch auf den zweiten, vorstehend erwähnten Sender umgeschaltet (sogenanntes "Switch over") oder aber die Anlage wird abgeschaltet (sogenanntes "Shut down"). Insbesondere müssen die dafür vorhandenen Einrichtungen sowohl die anlageinternen Signale, die von den Strahlerelementen ausgekoppelten Signale als sogenannter "Integral Monitor" als auch die im Nahfeld; sogenanntes "Near field" oder "Nex field" und die im Fernfeld, sogenanntes "Far field", empfangenen Signale auswertet und die so aufgenommenen Werte mit den erforderlichen Sollwerten vergleichen; das Auswerteergebnis dieses Vergleiches ist dann für die mögliche Umschaltung oder gar Abschaltung maßgeblich.

Überdies verfügen solche terrestrischen Navigations- und Landesysteme im Regelfall auch noch über ein Fernüberwachungssystem, das sogenannte "Remote Monitoring System", mit dem weitere, extern aufgebaute Anzeigeeinheiten, die z.B. der sogenannte "Technical Room" des Flughafens oder in Wartungzentren aufgebaut sind, wo die Anlagezustände überwacht und kontrolliert werden können.

Da terrestrische Navigations- und Landesysteme, wie zum Beispiel die bereits erwähnten Systeme ILS und MLS, für den Dauereinsatz mit hoher Verfügbarkeit konzipiert sind, ist für die Systeme kennzeichnend, dass die von ihnen an die jeweiligen Luftfahrzeuge übermittelten Informationen als "sicherheitskritisch" eingestuft werden. Das bedeutet, dass vor allem im Bereich des Betriebes nach Kategorie CAT II und CAT III, bei denen eine Landung auch ohne Bodensicht, also unter Kontrolle des Autopiloten erfolgen kann, jedwede Anlagestörung erkannt, aufgezeichnet und zweifelsfrei einem Defekt oder einem anderen Störereignis zugeordnet werden kann. Bekanntermaßen wird dazu die "Mittlere Zeit zwischen Anlagenausfällen oder Anlageabschaltungen", sogenanntes "MT BO" d.h. "Mean Time Between Ontages" als Kriterium benutzt.

Bei den bisherigen Betrachtungen wurden vornehmlich anlageninterne bzw. anlageneigene Ereignisse für die Überwachung, das sogenannte Monitoring herangezogen. Es ist aber leicht einzusehen, dass auch Ereignisse von außerhalb der Anlage und von dieser nicht beeinflussbare Vorkommnisse auf die abgestrahlten Sendesignale und die Kontrolle einwirken. Es wurde ermittelt, dass der Anteil derartig verursachter, nicht identifizierbarer Ereignisse, die zur Abschaltung oder Umschaltung der Anlage führten, im Bereich zwischen 20 und 40% beträgt.

Die Aufgabe der vorliegenden Erfindung besteht darin, ein Überwachungssystem für terrestrische Navigations- und Landesysteme der eingangs genannten Art zu schaffen, mit dem auch solche, durch externe Einflüsse verursachte Ausfälle der Navigations- und Lande-Anlage identifiziert und ausgewertet werden können.

Die Lösung dieser Aufgabe besteht darin, dass dem Überwachungssystem zusätzlich Sensoren zur Erkennung von Umfeldzuständen und Ereignissen im Einflussbereich des Navigations- und/oder Lande-Systems zugeschaltet sind, dass die so erkannten Informationen der Sensoren aufgezeichnet und in der Weise gespeichert werden, dass diese Informationen mit den jeweils zeitgleich ermittelten und aufgezeichneten Funktionsabläufen des Navigations- und Lande-Systems verknüpfbar sind.

Da, wie weiter vorstehend angegeben, die Ausfallursache bzw. deren eindeutige Identifikation maßgeblich die Beurteilung und den zugelassenen Betriebsumfang beeinflussen, ist der erreichbare Vorteil sowohl hinsichtlich des betriebstechnischen als auch des wirtschaftlichen Umfangs leicht abschätzbar. Ein weiterer Vorteil wird darin gesehen, dass insbesondere bei bestehenden Anlagen eine Aufrüstung im erfinderischen Umfang modular machbar ist, d.h. also ohne erhebliche Änderungen der bestehenden Anlagenteile. Weitere Einzelheiten und nützliche Ausbildungen des erfindungsgemäßen Überwachungssystems können den Unteransprüchen 2 bis 8 sowie der nachfolgenden Beschreibung entnommen werden.

In Verbindung mit den in den Unteransprüchen 2 bis 8 aufgeführten Merkmalen, sind nachfolgend beispielhaft einige der von außen verursachten Störfälle beschrieben. Zur Erfassung der Störursache ist es vorrangig wichtig, dass die geeigneten Sensoren in dem zu überwachenden Bereich an geeigneter Stelle angebracht sind. Wenn z.B. zu vermeiden ist, dass sich im Sendebereich der Antenne Personen, Fahrzeuge oder Tiere unbefugt aufhalten und bewegen, wird man in erster Linie an optische Sensoren, z.B. in Form einer oder mehrerer Videokameras denken. Ebenso können in solchen Fällen auch akustische Melder sowohl allein als auch ergänzend eingesetzt werden.

Hinsichtlich der optischen und akustischen Sensoren ist es natürlich selbstverständlich, den Empfindlichkeitsbereich nicht auf sicht- oder hörbarer Ereignisse zu beschränken; so sind z.B. auch Nachtsichtgeräte oder seismische Sensoren miterfasst.

In einem weiteren Beispiel seien insbesondere wetterbedingte Störfälle genannt. Danach ist es natürlich, Sensoren zur Messung der Temperatur; der Windgeschwindigkeit und Richtung; der Niederschlagsmenge bzw. Schneehöhe, Vereisung vorzusehen. Ebenso wird man geeignete Sensoren zur Erfassung von Gewittern, insbesondere Blitzeinschlägen vorsehen. Weiterhin ist es nützlich, elektromagnetische Sensoren vorzusehen, mit deren Hilfe es möglich ist, z.B. eingestrahlte Störfelder zu erfassen.

Wenn man an die Vielzahl und Verschiedenheit der zu erfassenden Ereignisse denkt, erscheint es von Vorteil, diese Ereignisse in einer zentralisierten, entsprechend ausgestatteten Datenverarbeitungsanlage zu erfassen, aufzuzeichnen und auszuwerten. Unter entsprechender Ausstattung wird hier in erster Linie an Speicherkapazität, Verarbeitungsgeschwindigkeit und statistische Auswertekapazität gedacht. Dabei ist es selbstverständlich, 'dass die erfassten Ereignisse und deren Auswertung dem jeweils betroffenen Überwachungssystem zur Einleitung der notwendigen Schaltvorgänge und ggf. zur optischen Darstellung zuleitbar sind. Die angesprochene statistische Auswertekapazität ist sowohl für eine zentrale als auch individuelle Aufbereitung vorgesehen, wobei die Auswerteergebnisse von der bloßen Darstellung bis zur Aufbereitung für die Erstellung maschineller Lernprogramme dienen sollen.

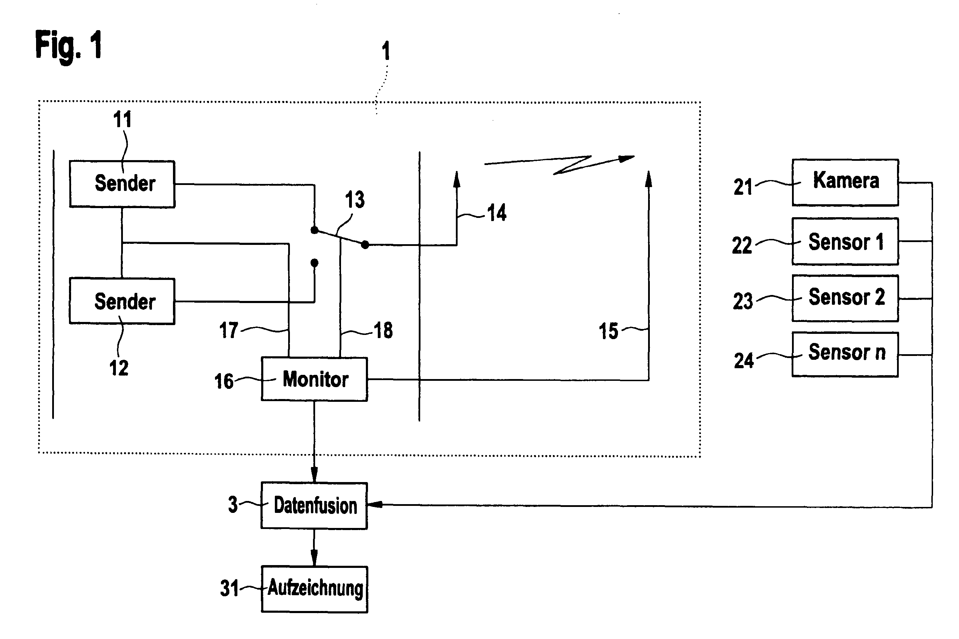

Je nach Verwendungszweck der Auswerteergebnisse wird man diese auch in einem Zusammenhang mit Ort und Zeit der Erfassung verknüpfen. In der beigefügten Zeichnung ist in Fig. 1 eine schematische Darstellung der erfindungsgemäßen Anlage gezeigt.

Im Block 1 sind die anlageinternen Funktionen gezeigt. Dazu gehören die beiden Sender 11 und 12, die beide an einen Umschalter 13 zur Verbindung mit der Antenne 14 angeschlossen sind. Bei der Antenne 14 handelt es sich um eine Sendeantenne. Die Antenne 15 ist eine Empfangsantenne, welche die von der Antenne 14 ausgesendeten Signale empfängt und der mit Monitor bezeichneten Überwachungseinrichtung 16 zuleitet. Außerdem werden dem Monitor 16 die Signale der Sender 11 und 12 direkt über die Leitung 17 zugeführt. Mit der Leitung 18 ist die Möglichkeit eröffnet, abhängig vom Auswerteergebnis im Monitor 16, d.h. in der Überwachungseinrichtung, von einem Sender auf den anderen Sender 12 umzuschalten. Dies wurde bereits eingangs ausführlich behandelt.

In Übereinstimmung mit der Erfindung sind mit 21; 22; 23 und 24 als Beispiele die vorgesehenen Sensoren für die Überwachung von anlageunabhängigen Ereignisse nur angedeutet. Diese Sensoren 21 bis 24, die bereits vorher in ihrer Funktion beschrieben wurden, sind alle an eine zentrale Datenverarbeitungsanlage 3, hier mit Datenfusion bezeichnet, angeschlossen und führen dieser ihr Ausgangssignal zu. Außerdem werden der Datenfusion 3 die Auswerteergebnisse des Monitors 16 zugeführt und in der bereits beschriebenen Weise unter vielerlei Aspekten ausgewertet. Außerdem ist mit der Datenfusion 3 noch eine Aufzeichnung 31 verbunden, welche die Auswerteergebnisse der Datenfusion 3 sowie ggfs. der Sensoren etc. detailliert aufzeichnet. Nicht dargestellt ist die Möglichkeit, der Rückmeldung von der Datenfusion 3 an den Monitor 16 zur anlagenindividuellen Darstellung oder sonstigen Verwertung.

## Patentansprüche

1. Überwachungssystem für terrestrische Navigations- und Lande-Systeme, in dem die von einem solchen Navigations- oder Lande-System ausgeübten Funktionen, insbesondere die Aussendung und der Empfang von Informationen über Antennen des Systems, dauernd überwacht und ausgewertet werden, **dadurch gekennzeichnet, dass** dem Überwachungssystem zusätzlich Sensoren zur Erkennung von Umfeldzuständen und Ereignissen im Einflussbereich des Navigations- und/oder Lande-Systems zugeschaltet sind, dass die so erkannten Informationen der Sensoren aufgezeichnet und in der Weise gespeichert werden, dass diese Informationen mit den jeweils zeitgleich ermittelten und aufgezeichneten Funktionsabläufen des Navigations- und Lande-Systems verknüpfbar sind.

2. Überwachungssystem nach Anspruch 1, **dadurch gekennzeichnet, dass** die Sensoren zur Aufnahme optischer, akustischer, elektromagnetischer und/oder allgemeiner physikalischer Vorgänge, insbesondere wetterrelevanter Ereignisse eingerichtet sind.

3. Überwachungssystem nach Anspruch 1 oder 2, **dadurch gekennzeichnet, dass** die Betriebsdaten und die erfassten Daten der Umfeldzustände und Umfeldereignisse mehrerer Navigations- und Landesysteme zu einer zentralen Aufzeichnungs- und Auswerte-Einrichtung übertragen werden.

4. Überwachungssystem nach Anspruch 1, **dadurch gekennzeichnet, dass** die erfassten und ausgewerteten Daten auf Monitoren darstellbar sind und/oder zu vorbestimmten, automatisierten Schaltvorgängen im Rahmen des Systembereiches benutzt werden.

5. Überwachungssystem nach Anspruch 4, **dadurch gekennzeichnet, dass** die erfassten und ausgewerteten Daten und/oder die daraus sich ergebenden Schaltvorgänge klassifiziert und statistisch ausgewertet werden und einzeln oder in vorbestimmten Kombinationen in einem Lernprogramm einer zentralen Datenverarbeitungsanlage verwertbar sind.

6. Überwachungssystem nach Anspruch 4 oder 5, **dadurch gekennzeichnet, dass** die erfassten und ausgewerteten Daten in zeitabhängigen Ereignisabläufen erfassbar und verknüpfbar sind.

7. Überwachungssystem nach Anspruch 4 oder 5, **dadurch gekennzeichnet, dass** die erfassten und ausgewerteten Daten mit dem Ort ihrer Entstehung bzw. Erfassung klassifizier werden.

8. Überwachungssystem nach Anspruch 4 oder 5, **dadurch gekennzeichnet, dass** die erfassten und ausgewerteten Daten mit allgemein verfügbaren Informationen, z.B. Tageszeit, Jahreszeit oder Topografie verknüpfbar sind.
